# EUROPEAN PATENT SPECIFICATION

(11) **EP 1 946 998 B1**
(45) Date of publication and mention of the grant of the patent: **29.09.2010**
(21) Application number: 06811504.7
(22) Date of filing: 10.10.2006
(51) Int. Cl.: B62J 15/00, A61G 5/04, B62D 25/18, B62K 5/00, B60S 1/68

(54) **SMALL-SIZED VEHICLE**
KLEINES FAHRZEUG
PETIT VEHICULE

(30) Priority: 21.10.2005 JP 2005307845
(43) Date of publication of application: 23.07.2008
(73) Proprietor: HONDA MOTOR CO., LTD., Tokyo 107-8556 (JP)
(72) Inventor: ICHIKAWA, Katsuhisa, Wako-shi, Saitama 351-0193 (JP); MARUYAMA, Shuhei, Wako-shi, Saitama 351-0193 (JP); MINATO, Kazuhiro, Wako-shi, Saitama 351-0193 (JP); NAGAOKA, Masatoshi, Wako-shi, Saitama 351-0193 (JP)
(74) Representative: Piésold, Alexander James
(86) International application number: PCT/JP2006/320191
(87) International publication number: WO 2007/046265

(56) References cited:
- EP-A- 0 523 458
- FR-A- 1 575 907
- GB-A- 206 790
- GB-A- 2 364 034
- JP-A- 11 342 867
- JP-A- 2000 238 678
- JP-A- 2000 238 678
- JP-U- 02 012 983
- JP-U- 64 008 480
- NL-C- 73 487
- US-A- 5 564 750

## Description

### TECHNICAL FIELD

The present invention relates to a small-sized vehicle that can travel on a sidewalk and is suitable for use by elderly people, etc. and, in particular, to an improvement of a small-sized vehicle in which, in order to cover an upper part of a wheel, a fender is disposed along the outer peripheral face thereof.

### BACKGROUND ART

A small-sized vehicle that can travel on a sidewalk and is suitable for use by elderly people, etc. is already known as disclosed in, for example, Patent Publication 1.
Patent Publication 1: Japanese Patent Application Laid-open No. 9-315343

### DISCLOSURE OF INVENTION

### PROBLEMS TO BE SOLVED BY THE INVENTION

Conventionally, in such a small-sized vehicle fenders covering left and right front wheels from above are formed integrally with a vehicle body so as to become a part of the vehicle body; they must be formed with a large width due to the necessity for covering the front wheels, which are turned, over a wide area, and this causes various problems. That is, the fenders increase the width of the vehicle body, which might intimidate a pedestrian while traveling on a sidewalk; furthermore, a driver cannot accurately recognize the state of the front wheels due to obstruction by the fenders and, moreover, when the fenders are replaced with new ones, not only the fenders but also part of the vehicle body joined thereto needs to be replaced, thus increasing the replacement cost.

Although the above-mentioned problems can be solved by employing a small movable fender covering an upper part of a front wheel and turning integrally with each front wheel, due to the front wheel being in the proximity of the movable fender, when traveling in a muddy place, mud attached to the front wheel clogs the gap between the front wheel and the movable fender, thereby causing a large resistance to travel.

The present invention has been accomplished in the light of such points, and it is an object thereof to provide a small-sized vehicle that employs a structure in which, in order to cover an upper part of a wheel, a fender is disposed along the outer peripheral face thereof, and in which the arrangement is such that mud does not clog the gap between the wheel and the fender, thus enabling travel in a muddy place with little effort.

It is known from EP-A-0 523 458, which is considered as being the closest prior art, to provide a small-sized vehicle in which, in order to cover an upper part of a wheel, a fender is disposed along the outer peripheral face thereof, wherein formed on the fender is a first soil removing piece projecting from the rear edge of the fender so as to be inclined downwardly toward the outer peripheral face of the wheel, so that when the wheel rotates forward, mud attached to the outer peripheral face thereof can be scraped off by the soil removing piece, and wherein formed on the fender are a slit positioned above the first soil removing piece and extending in the width direction of the wheel, and a second soil removing piece projecting from the lower edge of the slit toward the outer peripheral face of the wheel.

### MEANS FOR SOLVING THE PROBLEMS

The present invention is **characterised in that** said second soil removing piece projects from the lower edge of the slit so as to be inclined upwardly toward the outer peripheral face of the wheel, so that when the wheel rotates rearward mud attached to the outer peripheral face thereof can be guided to the slit while being scraped off and discharged outside the fender.

According to a second aspect of the present invention, preferably a reinforcing wall providing a connection between upper and lower edges of the slit is formed on the fender in a laterally intermediate section of the slit, and the reinforcing wall is disposed closer to the outer peripheral face of the wheel than the first soil removing piece.

According to a third aspect of the present invention, preferably a third soil removing piece is formed on an outside wall portion of the fender covering the outside face of the wheel, the third soil removing piece being connected to the first soil removing piece and projecting toward the outside face of the wheel.

According to a fourth aspect of the present invention, preferably a soil removing piece is formed on an inside wall portion of the fender covering the inside face of the wheel, the soil removing piece being inclined relative to the radius of the wheel and projecting toward the inside face of the wheel.

According to a fifth aspect of the present invention, preferably the fender is secured to a wheel support member axially supporting the wheel via at least three positions, that is, two positions sandwiching a vertical plane containing the axis of rotation of the wheel and one position in the proximity of the first soil removing piece.

According to a sixth aspect of the present invention, preferably the small-sized vehicle comprises a pair of left and right turnable front wheels, a steering column disposed between the two front wheels in an upright state and supporting handlebars, a steering mechanism disposed across the two front wheels so as to couple the handlebars to the two front wheels, a driver's footrest part disposed to the rear of the steering column, and a driver's seat disposed to the rear of the footrest part, the fender being disposed so as to cover an upper part of each front wheel and turning integrally with the front wheel, and this fender being provided with the slit and the soil removing pieces.

The wheel and the fender correspond to a front wheel and a movable fender 35 of an embodiment of the present invention, which is described later, and the wheel support member corresponds to a knuckle 26.

### EFFECTS OF THE INVENTION

In accordance with the present invention, when the wheel rotates forward, mud attached to the outer peripheral face thereof can be scraped off downward of the fender by the first soil removing piece, and when the wheel rotates rearward, mud attached to the outer peripheral face thereof can be guided to the slit while being scraped off and discharged outside the fender; it is therefore possible to prevent mud from clogging the gap between the wheel and the fender regardless of the direction in which the wheel rotates, thereby ensuring that the wheel rotates smoothly.

In accordance with the second aspect of the present invention, since the reinforcing wall provides a connection between the upper and lower opposite edges of the slit in a laterally intermediate section, not only are the surroundings of the slit and the first soil removing piece reinforced, but also lumps of mud discharged through the slit are sheared laterally, and it thus plays a role in discharging the mud smoothly.

Furthermore, since the reinforcing wall is disposed closer to the outer peripheral face of the wheel than the soil removing piece, when scraping mud off the wheel by the soil removing piece, even if the soil removing piece digs into the mud, due to the reinforcing wall abutting against the outer peripheral face of the wheel, it is possible to prevent the soil removing piece from digging in excessively and thus prevent any damage to the outer peripheral face of the wheel.

In accordance with the third aspect of the present invention, mud attached to the outer peripheral face of the wheel can be scraped off by the third soil removing piece and, in cooperation with the first soil removing piece, the effect in scraping off mud from the wheel can be further enhanced.

In accordance with the fourth aspect of the present invention, mud attached to the outer peripheral face of the wheel can be smoothly scraped off by the soil removing piece inclined relative to the radius of the wheel and, in cooperation with the soil removing piece, the effect in scraping off mud from the wheel can be further enhanced.

In accordance with the fifth aspect of the present invention, it is possible to securely support the entire movable fender on the knuckle, and it is also possible to transmit the load imposed on the fender directly to the wheel support member and to support it thereon when mud on the wheel is scraped off by the first soil removing piece, thus preventing as far as possible deformation of the fender.

In accordance with the sixth aspect of the present invention, since a fender with a relatively small area suffices for covering just the area immediately above the front wheel, compared with one that is formed integrally with a vehicle body in order to cover a wide area of a turning front wheel, such as a fixed front fender of a conventional small-sized vehicle, this can contribute to a reduction in the width of the vehicle body, and avoid intimidating a pedestrian while traveling on a sidewalk. Moreover, since the fender has the function of scraping off mud, it is possible to travel smoothly in a muddy place. Furthermore, the driver views the state in which mud is scraped off from the front wheel while driving, thus comprehending the muddy state of the road surface.

### BRIEF DESCRIPTION OF DRAWINGS

[FIG. 1] FIG. 1 is a perspective view of a small-sized vehicle related to an embodiment of the present invention (first embodiment).
[FIG. 2] FIG. 2 is a front view of the small-sized vehicle (first embodiment).
[FIG. 3] FIG. 3 is a side view of the small-sized vehicle (first embodiment).
[FIG. 4] FIG. 4 is a side view showing a body frame of the small-sized vehicle (first embodiment).
[FIG. 5] FIG. 5 is a plan view showing the body frame (first embodiment).
[FIG. 6] FIG. 6 is a sectional view along line 6-6 in FIG. 3 (first embodiment).
[FIG. 7] FIG. 7 is a sectional view along line 7-7 in FIG. 6 (first embodiment).
[FIG. 8] FIG. 8 is an outside view of a movable fender (first embodiment).
[FIG. 9] FIG. 9 is a sectional view along line 9-9 in FIG. 6 (first embodiment).
[FIG. 10] FIG. 10 is a sectional view along line 10-10 in FIG. 7 (first embodiment).
[FIG. 11] FIG. 11 is a sectional view along line 11-11 in FIG. 10 (first embodiment).
[FIG. 12] FIG. 12 is a sectional view along line 12-12 in FIG. 3 (first embodiment).
[FIG. 13] FIG. 13 is a sectional view along line 13-13 in FIG. 12 (first embodiment).
[FIG. 14] FIG. 14 is a sectional view along line 14-14 in FIG. 12 (first embodiment).

### EXPLANATION OF REFERENCE NUMERALS AND SYMBOLS

- V: Small-sized vehicle
- P: Vertical plane
- 2f: Wheel (front wheel)
- 3: Handlebars
- 4: Steering mechanism
- 6: Driver's seat
- 15: Footrest part (step floor)
- 26: Wheel support member (knuckle)
- 28: Steering column
- 35: Fender (movable fender)
- 35a: Peripheral wall portion
- 35b: Inside wall portion
- 35c: Outside wall portion
- 44: First soil removing piece
- 45: Second soil removing piece
- 46: Slit
- 47: Reinforcing wall
- 48: Third soil removing piece
- 49: Soil removing piece

### BEST MODE FOR CARRYING OUT THE INVENTION

A mode for carrying out the present invention is explained below by reference to a preferred embodiment of the present invention shown in the drawings.

### EMBODIMENT 1

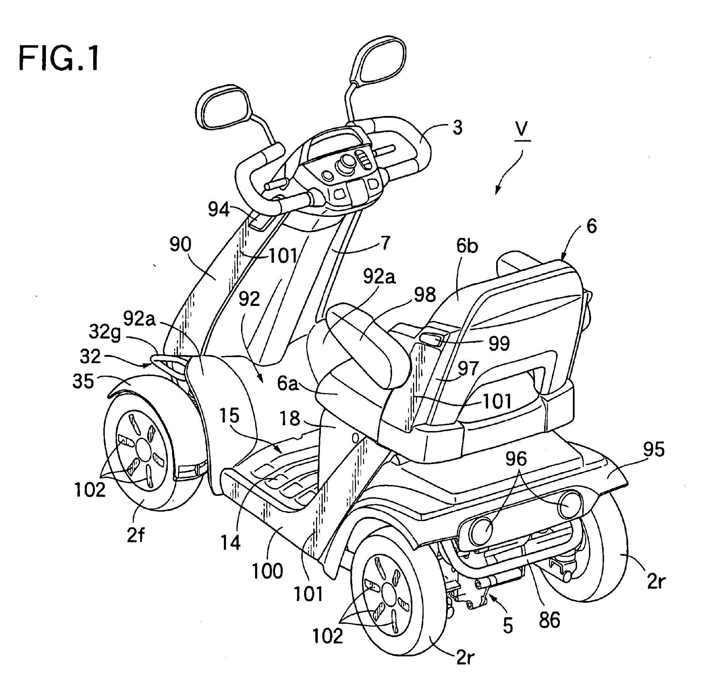

Referring to FIG. 1 to FIG. 5, a small-sized vehicle V includes a body frame 1, a pair of left and right front wheels 2f and 2f turnably suspended on a front end part of the body frame 1, handlebars 3, a steering mechanism 4 for transmitting movement of the handlebars 3 to the two front wheels 2f and 2f, a power unit 5 suspended on a rear end part of the body frame 1, a pair of left and right rear wheels 2r and 2r supported on the power unit 5 and driven together, a driver's seat 6, and a vehicle body cover such as a leg shield 7, detailed explanation thereof being given below in sequence. In the explanation below, left and right, and front and rear are relative to the small-sized vehicle V.

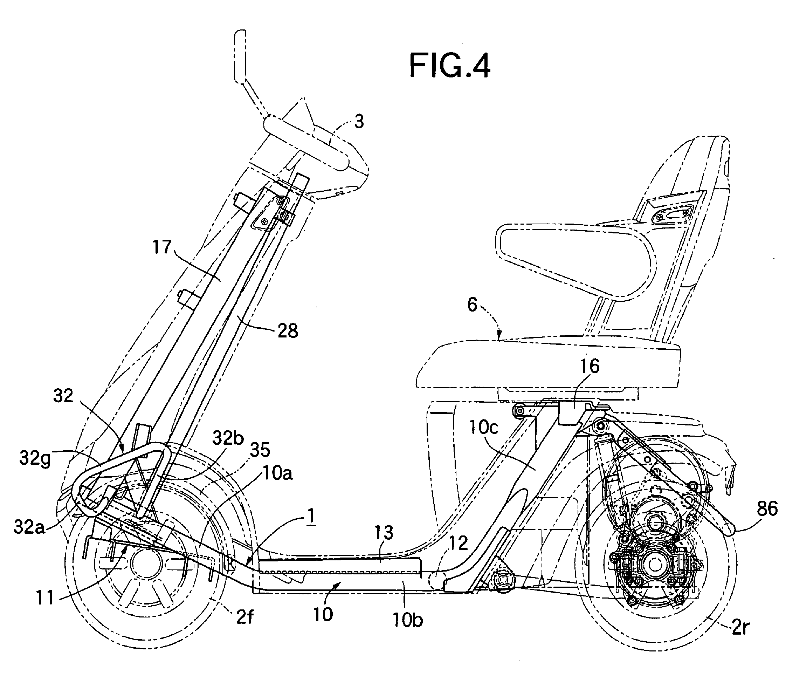

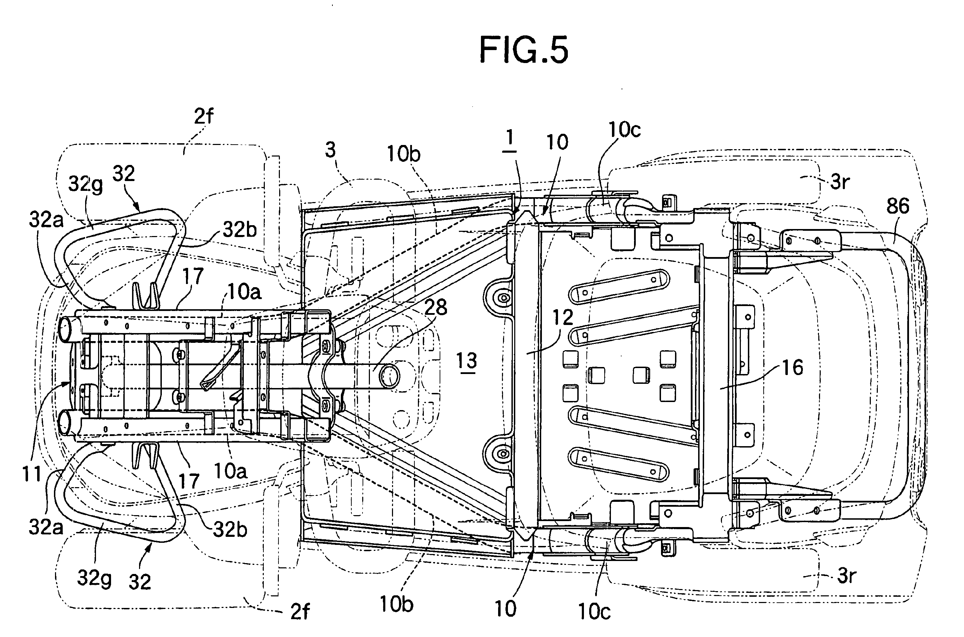

First, the body frame 1 has, as shown in FIG. 4 and FIG. 5, a pair of pipe-shaped main frames 10 and 10 disposed so as to be laterally separated from each other. Each main frame 10 is formed from a frame front portion 10a extending while being inclined downward from the front end to the rear, a frame intermediate portion 10b horizontally extending from the rear end of the frame front portion 10a to the rear, and a frame rear portion 10c extending while being inclined upward to the rear from the rear end of the frame intermediate portion 10b; the frame front portions 10a and 10a of the two main frames 10 and 10 are disposed parallel to each other, the frame intermediate portions 10b and 10b are disposed so that the gap therebetween widens toward the rear, and the frame rear portions 10c and 10c are disposed parallel to each other. A sub-frame 11, which is made of a steel sheet, is welded to the frame front portions 10a and 10a so as to provide a connection therebetween, a pipe-shaped cross member 12 is welded to the rear ends of the frame intermediate portions 10b and 10b so as to provide a connection therebetween, and a rectangular floor panel 13 is welded to upper parts of the frame intermediate portions 10b and 10b so as to provide a connection therebetween. A seat rail 16 is welded to upper ends of the frame rear portions 10c and 10c so as to provide a connection therebetween. Furthermore, lower end parts of a pair of left and right support posts 17 and 17 inclined slightly rearward are welded to front end parts of the frame front portions 10a and 10a. The body frame 1 is arranged as above.

A driver's seat 6 is mounted on the seat rail 16. Furthermore, an auxiliary equipment housing box 18 housing auxiliary equipment such as a battery 19 is mounted from the front side between the frame rear portions 10c and 10c.

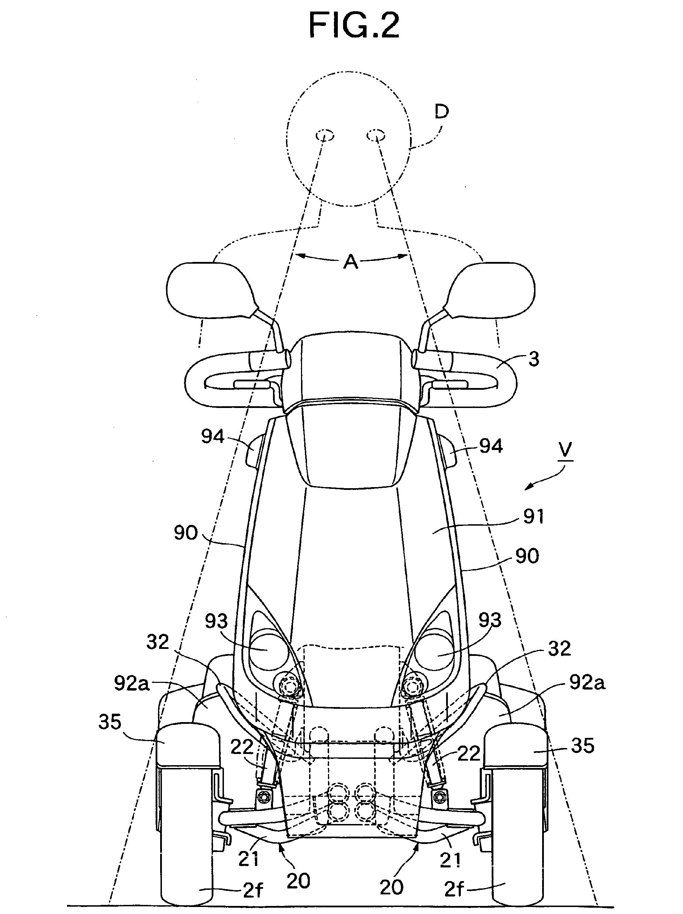

As shown in FIG. 2, FIG. 3, and FIG. 6, the left and right front wheels 2f and 2f are independently suspended on the sub-frame 11 via front suspension systems 20 and 20 respectively. Each front suspension system 20 includes an A-shaped front suspension arm 21 having its inner end side bifurcated into front and rear parts and a telescopic front damper 22. A pair of front and rear boss portions 21a and 21a at the inner end of the front suspension arm 21 are supported via resilient bushes 24 and 24 on a pair of front and rear pivot shafts 23 and 23 fixedly provided on the sub-frame 11 and extending in the fore-and-aft direction so that the front suspension arm 21 can swing vertically around the pivot shafts 23 and 23, and the front damper 22 for cushioning vertical swinging of the front suspension arm 21 is connected between each front suspension arm 21 and the support post 17 on the same side.

Connected turnably via a kingpin 27 to the outer end of the front suspension arm 21, that is, the swinging end, is a knuckle 26 having an axle 25 rotatably supporting the front wheel 2f on the same side.

A steering column 28 supported by the sub-frame 11 and the left and right support posts 17 and 17 is disposed in an intermediate section between the two support posts 17 and 17, and the handlebars 3, which are disposed above the steering column 28, are operatively connected to the left and right knuckles 26 and 26 via the steering mechanism 4.

The steering mechanism 4 is formed from a steering shaft 29 rotatably supported on the handlebars 3 and having its upper end part connected to the handlebars 3, a steering arm 30 formed integrally with a lower end part of the steering shaft 29 and extending to the rear of the shaft 29, and a pair of left and right tie rods 31 and 31 providing a connection between the steering arm 30 and knuckle arms 26a and 26a of the left and right knuckles 26 and 26. The knuckle arm 26a extends from a lower end part of the knuckle 26 further rearward than the kingpin 27, pivots around the kingpin 27 in response to steering of the handlebars 3, and makes the left and right front wheels 2f and 2f turn.

As shown in FIG. 1, FIG. 2, FIG 6, and FIG. 7, a movable fender 35 covering substantially half of a peripheral face of an upper part of the front wheel 2f is disposed above each front wheel 2f, and this movable fender 35 is mounted on the corresponding knuckle 26 as follows, so that it can be turned integrally with the corresponding front wheel 2f. That is, the movable fender 35 is made of a synthetic resin, and is formed by integrally connecting an arc-shaped peripheral wall portion 35a covering an upper part of the outer peripheral face of the front wheel 2f, an inside wall portion 35b covering an upper part of the inside face of the front wheel 2f, and an outside wall portion 35c covering the edge of an upper part of the outside face of the front wheel 2f; a vertical first mounting portion 36 is formed in an intermediate section of the inside wall portion 35b, and a horizontal second mounting portion 37 is formed in a rear end section thereof. A pair of front and rear brackets 38 and 38 are formed on the knuckle 26 so as to rise from the upper end thereof, the first mounting portion 36 is secured to these brackets 38 and 38 via bolts 39 and 39, and the second mounting portion 37 is secured to the knuckle arm 26a via a bolt 40. Removing the bolts 39 and 40 enables the movable fender 35 to be detached from the knuckle 26.

With regard to the left and right movable fenders 35 and 35, at least front end parts thereof are disposed so as to be within a field of vision A of a driver D seated on the seat 6 (see FIG. 2).

The driver D can therefore appropriately check the position and direction of the front wheels 2f and 2f on the road by viewing the movable fenders 35 and 35, which turn together with the left and right front wheels 2f and 2f, while driving the small-sized vehicle V, and thereby can easily carry out steering on a bad road or a tight bend.

Moreover, in the case of the movable fenders 35 and 35 a relatively small area suffices for covering just the area immediately above the front wheels 2f and 2f, and compared with one that is formed so as to cover a wide area of a turning front wheel, such as a fixed front fender of a conventional small-sized vehicle, which is integral with a vehicle body, it can contribute to a reduction in the width of the vehicle body, and avoid intimidating a pedestrian while traveling on a sidewalk.

Furthermore, mounting of each movable fender 35 can be carried out simply by bolting the first and second mounting portions 37 of the inside wall portion 35b to the brackets 38 and 38 and knuckle arm 26a of the knuckle 26, which axially supports the front wheel 2f, and the movable fenders 35 and 35 can reliably be turned simultaneously with the front wheels 2f and 2f.

Moreover, since each movable fender 35 can be independently detached from the knuckle 26, if it is damaged, only the movable fender 35 needs to be replaced with a new component irrespective of other members, thus reducing the cost of maintenance.

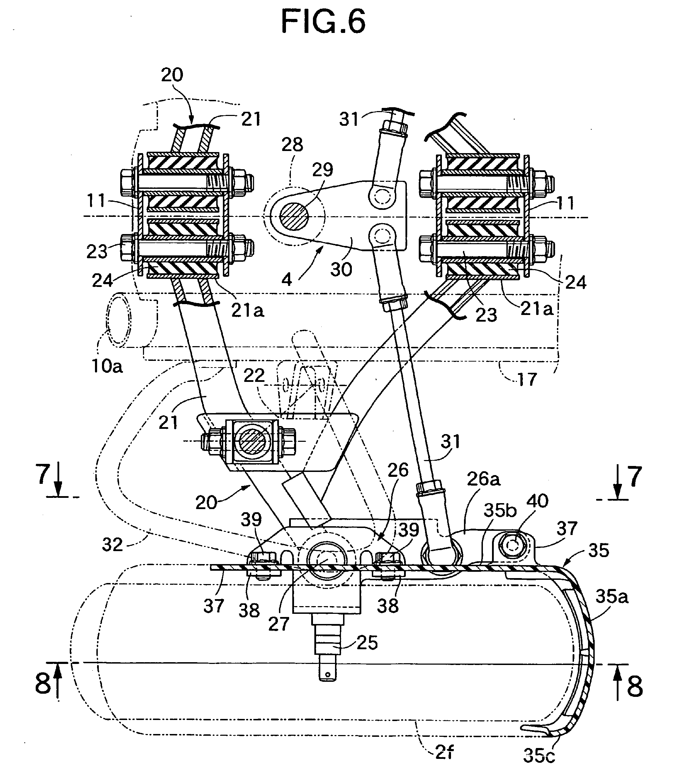

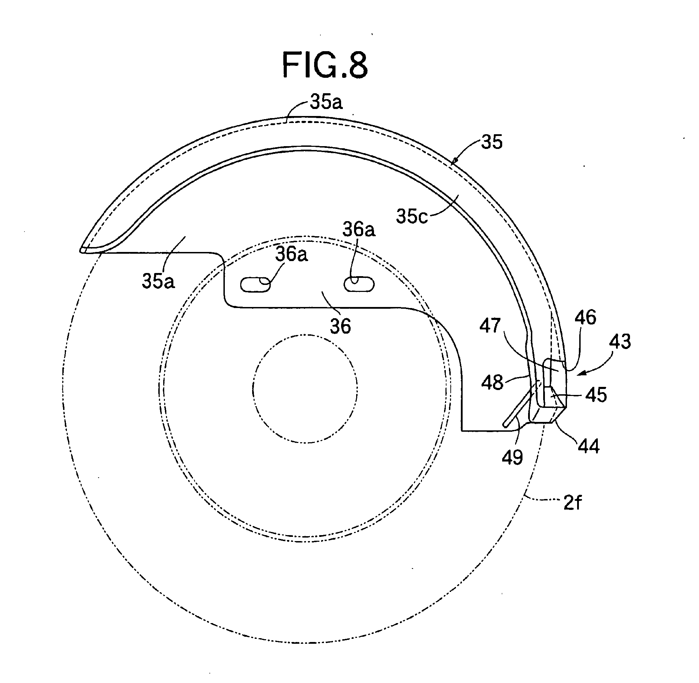

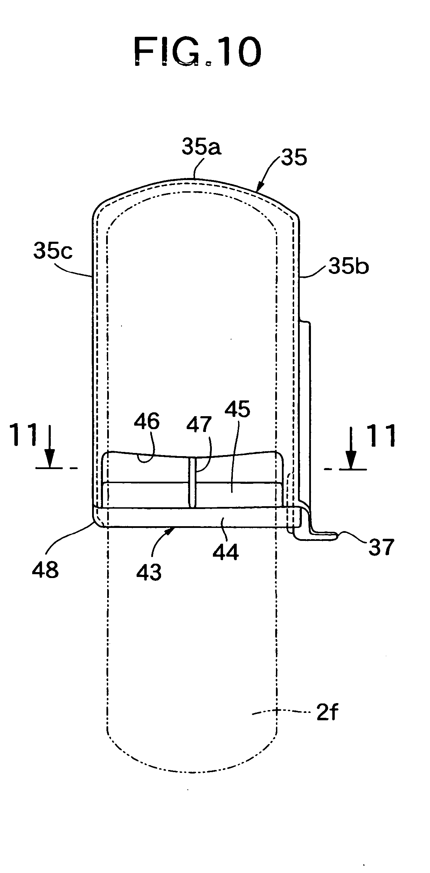

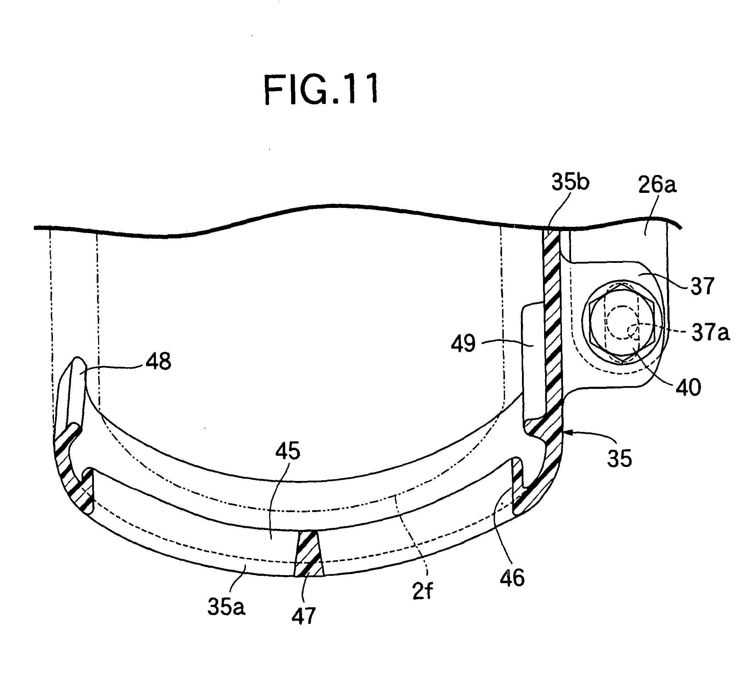

As shown in FIG. 6 to FIG. 11, in each movable fender 35, mud scraping means 43 for scraping off mud attached to the front wheel 2f is provided in a rear end part of the peripheral wall portion 35a thereof. This mud scraping means 43 is formed across the whole width at the lower end of the movable fender 35, that is, it is formed from a first soil removing piece 44 formed longer than the width of the front wheel 2f and a second soil removing piece 45 formed at the lower edge of a slit 46 opening across the whole width of the peripheral wall portion 35a directly above the first soil removing piece 44, and the second soil removing piece 45 is also formed longer than the width of the front wheel 2f. The first soil removing piece 44 has its extremity inclined downward relative to the outer peripheral face of the front wheel 2f and scrapes off mud attached to the outer peripheral face thereof when the front wheel 2f turns forward, and the second soil removing piece 45 has its extremity inclined upward relative to the outer peripheral face of the front wheel 2f and scrapes off mud attached to the outer peripheral face thereof and discharges it outside the slit 46 when the front wheel 2f turns backward. In particular, since the extremity of the first soil removing piece 44 projects obliquely downward relative to the outer peripheral face of the front wheel 2f, and the extremity of the second soil removing piece 45 projects obliquely upward relative to the outer peripheral face of the front wheel 2f, when the front wheel 2f turns forward and turns backward, the first and second soil removing pieces 44 and 45 tend to dig into the mud on the outer peripheral face of the front wheel 2f, thus smoothly scooping up the mud and thereby contributing to an improvement of an effect of scraping off mud.

The slit 46 is provided with a laterally thin reinforcing wall 47 providing a connection between upper and lower edge portions of a laterally intermediate section of the slit 46. This reinforcing wall 47 plays a role in reinforcing the periphery of the slit 46 and the first and second soil removing pieces 44 and 45. The reinforcing wall 47 is disposed so as to be closer to the outer peripheral face of the front wheel 2f than the two soil removing pieces 44 and 45, and when the rear end part of the movable fender 35 resiliently deforms so as to come into the proximity of the front wheel 2f, the reinforcing wall 47 abuts against the outer peripheral face of the front wheel 2f, thereby preventing the two soil removing pieces 44 and 45 from contacting the front wheel 2f. Therefore, when mud of the front wheel 2f is scraped off by the first soil removing piece 44 or the second soil removing piece 45, even if the first soil removing piece 44 or the second soil removing piece 45 digs into the mud, since the reinforcing wall 47 abuts against the outer peripheral face of the front wheel 2f, it is possible to prevent the soil removing pieces 44 and 45 from digging in excessively.

As shown in FIG. 6, FIG. 8, and FIG. 10, a third soil removing piece 48 in the proximity of the outer side face of the front wheel 2f is formed on a rear end part of the outside wall portion 35c of each movable fender 35. This third soil removing piece 48 has its lower end joined to the extremity of the first soil removing piece 44, and scrapes off mud attached to the outer peripheral face of the front wheel 2f when it turns forward.

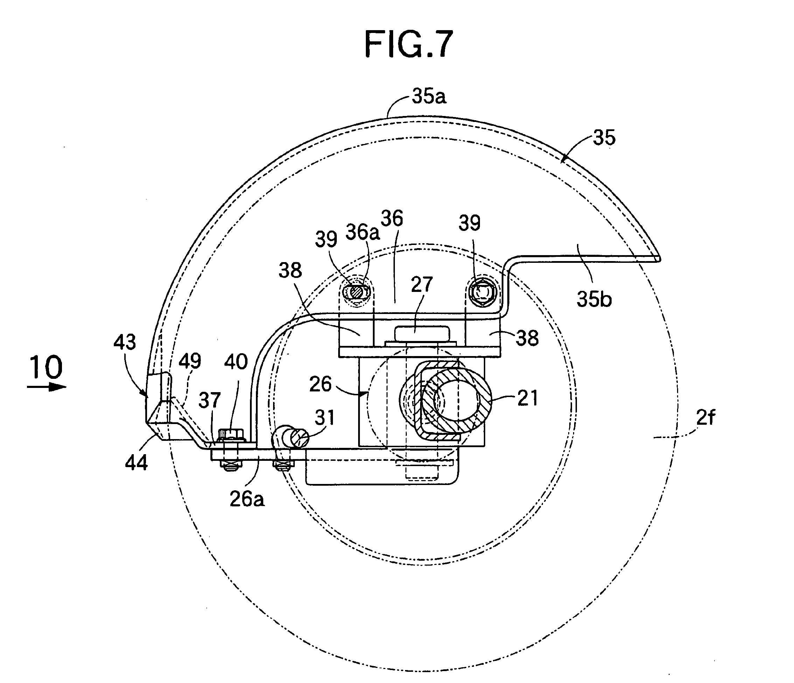

Furthermore, as shown in FIG 7, FIG. 10, and FIG. 11, a soil removing piece 49 is formed integrally with an inner face of the inside wall portion 35b of the movable fender 35, the soil removing piece 49 projecting toward an inside face of the front wheel 2f while being inclined downward to the front so as to make its lower end closer to the lower edge of the inside wall portion 35b, and this soil removing piece 49 scrapes off toward the rear mud attached to the side face of the front wheel 2f, particularly when it rotates forward.

Scraping off mud attached to the front wheel 2f as described above enables mud to be prevented from clogging the gap between each front wheel 2f and the movable fender 35, thus ensuring that each front wheel 2f rotates smoothly; it is therefore possible to smoothly travel in a muddy place and, moreover, the driver D views the state in which mud is scraped off from the front wheels 2f and 2f while driving, thus comprehending the muddy state of the road surface.

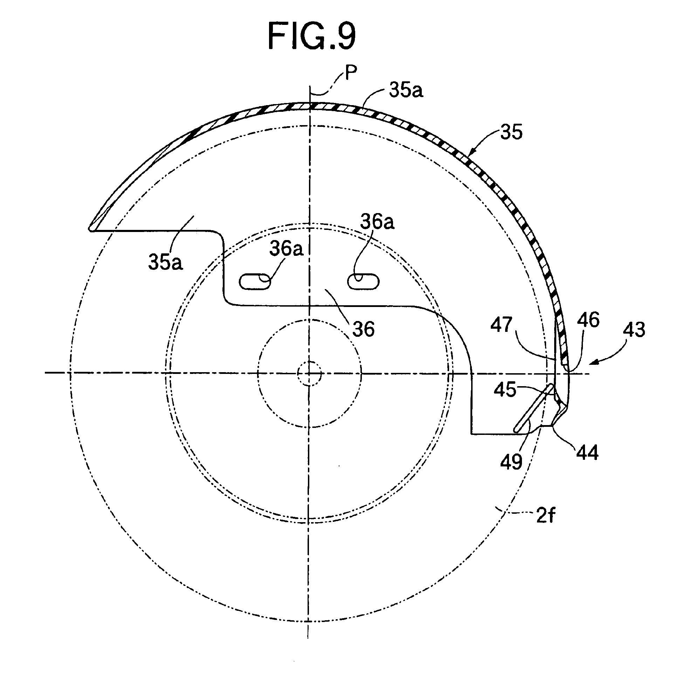

The structure for mounting the movable fender 35 on the knuckle 26 is now explained in further detail. A pair of front and rear first mounting holes 36a and 36a are disposed in the vertical first mounting portion 36 formed on the inside wall portion 35b of the movable fender 35 so as to sandwich a vertical plane P (see FIG. 9) containing the axis of rotation of the front wheel 2f, and a second mounting hole 37a is provided in the horizontal second mounting portion 37, which is formed on a lower end part of the inside wall portion 35b, so as to be in the proximity of the mud scraping means 43. These first and second mounting holes 36a and 37a are long holes that are long in the fore-and-aft direction. The first mounting portion 36 is secured to the pair of front and rear brackets 38 and 38 of the upper part of the knuckle 26 via the bolts 39 and 39 inserted through the first mounting holes 36a and 36a. The first mounting portion 36 is also secured to a rear end part of the knuckle arm 26a via the bolt 40 inserted through the second mounting hole 37a. When carrying out these securing procedures, moving the movable fender 35 back and forth along the direction of the major axis of the first and second mounting holes 36a and 37a adjusts the gap between the front wheel 2f and, in particular, the reinforcing wall 47, the first soil removing piece 44, and the second soil removing piece 45 at an appropriate gap that is effective for scraping off mud.

Since the movable fender 35 is supported on the knuckle 26 by the second mounting portion 37 in the proximity of the mud scraping means 43 as described above, when mud on the front wheel 2f is scraped off by the mud scraping means 43, the load imposed on the movable fender 35 is directly transmitted to and supported by the knuckle 26, thus preventing as far as possible the movable fender 35 from deforming.

Furthermore, since the first mounting portion 36 of the movable fender 35 is supported on the knuckle 26 at two positions in the fore-and-aft direction arranged so as to sandwich the vertical plane P containing the axis of rotation of the front wheel 2f, together with support via the second mounting portion 37, the entire movable fender 35 can be supported securely on the knuckle 26. Moreover, since the first and second mounting portions 36a and 37a form right angles to each other, the rigidity with which the movable fender 35 is supported is high, thus contributing to stabilization of the mounting attitude of the movable fender 35 and prevention of vibration.

In FIG. 1 and FIG 4 to FIG. 6, a pair of left and right guard members 32 and 32 are disposed on left and right sides of a front part of the body frame 1 so as to protrude to above the front wheels 2f and 2f on the same side while surrounding the front damper 22 on the same side. Each guard member 32 is formed by bending a pipe material in a loop shape, is formed in a loop shape from a linear grip portion 32g extending in the fore-and-aft direction and a pair of front and rear leg portions 32a and 32b extending from opposite ends of the grip portion 32g while bending downward, and is supported on the body frame 1 by securing the leg portion 32b on the rear side to an outside face of the frame front portion 10a of the main frame 10 and securing the leg portion 32a on the front side to an outside face of the support post 17 on the same side via a bolt, etc. The two leg portions 32a and 32b are disposed so that their outer ends are inclined upward while passing front and rear opposite sides of the front damper 22 and passing between the front wheel 2f and a front cover 91, a front side cover 90, and the leg shield 7, and the grip portion 32g occupies a position above the front wheel 2f and the movable fender 35.

The left and right guard members 32 and 32 can prevent an obstruction such as a dropped object from entering between the front cover 91 and the front wheels 2f and 2f, and protect the movable fender 35, the front wheel 2f, the front damper 22, etc. from the obstruction.

Since the grip portion 32g of each guard member 32 is exposed above the movable fender 35, when an assistant lifts a front part of the small-sized vehicle V, the grip portion 32g can easily be held without being obstructed by the front cover 91, etc., and the lifting operability is improved. Furthermore, since the grip portion 32g is disposed above the movable fender 35, muddy water scattered by the front wheel 2f is caught by the movable fender 35, thus preventing the grip portion 32g from becoming dirty due to muddy water and, therefore, the assistant's hands do not become dirty. In this way, the burden imposed on the assistant when lifting the front part of the small-sized vehicle V can be alleviated.

Moreover, since the two leg portions 32a and 32b of the guard member 32 are secured to the body frame 1, the strength with which the guard member 32 is supported is high, and it can sufficiently withstand the lifting load.

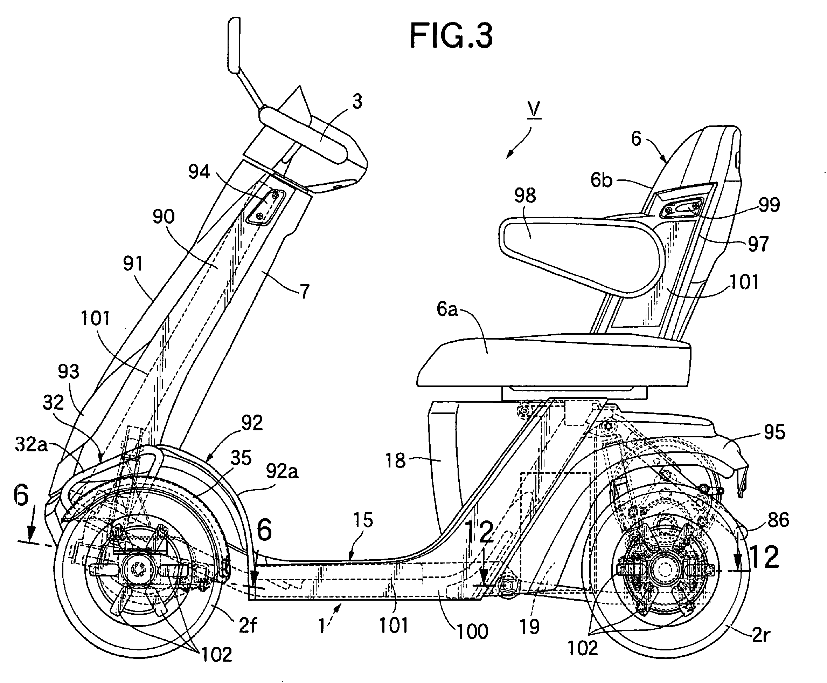

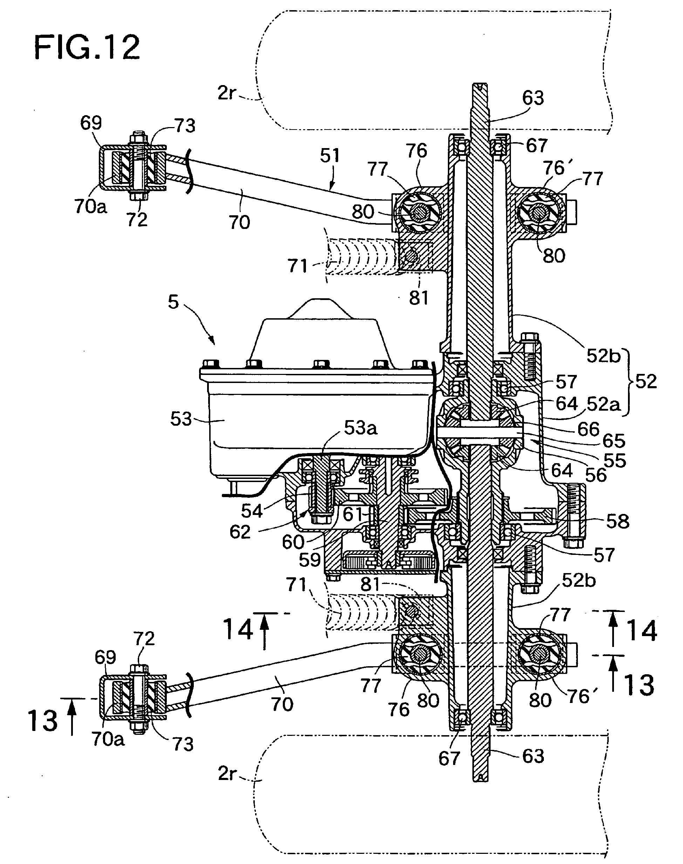

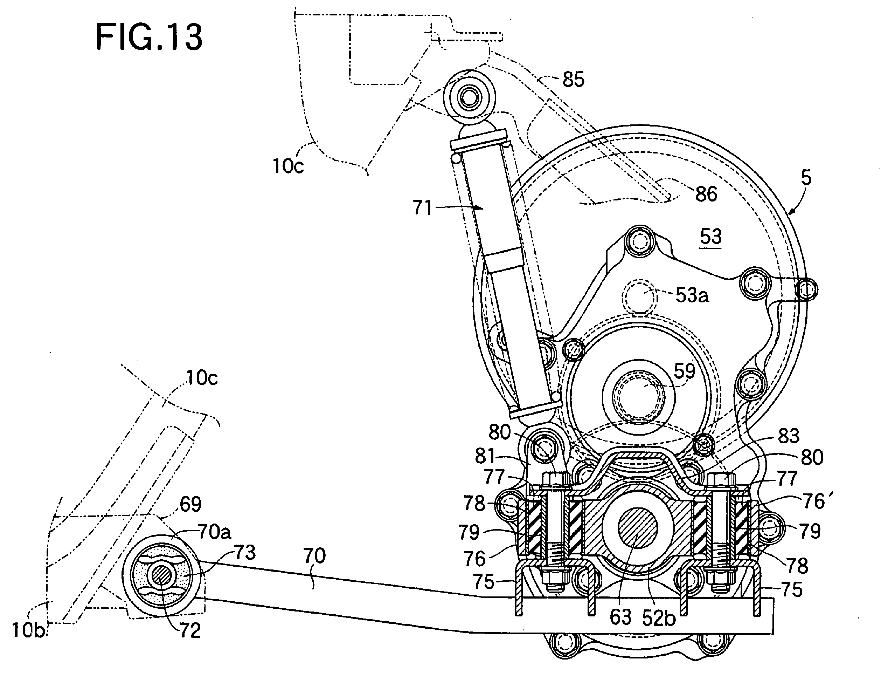

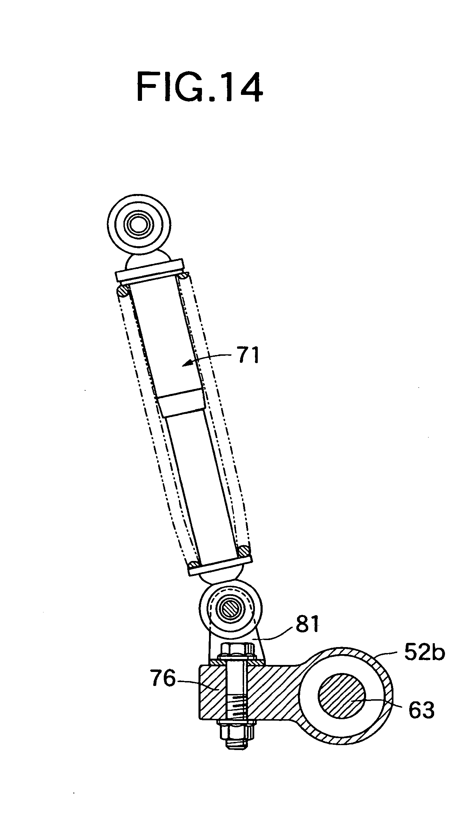

In FIG. 3 and FIG. 12 to FIG. 14, the power unit 5 is suspended on a rear part of the main frame 10 via a rear suspension system 51, and the pair of left and right rear wheels 2r and 2r are supported on the power unit 5. A casing 52 of the power unit 5 is formed from a reduction case 52a and a pair of left and right axle cases 52b and 52b projectingly provided integrally with left and right opposite side walls of a lower part of the reduction case 52a, an electric motor 53, which uses the battery 19 as a power source, is mounted on one side of an upper part of the reduction case 52a, and an output shaft 53a of the electric motor 53 is disposed so that a pinion gear 54 formed on a forward end part thereof projects into the reduction case 52a.

Within the reduction case 52a, a differential case 56 of a differential 55 is disposed coaxially with the left and right axle cases 52b and 52b, and left and right opposite end parts of the differential case 56 are rotatably supported on the reduction case 52a via ball bearings 57 and 57. A large-diameter final gear 58 is spline-coupled to the differential case 56. Within the reduction case 52a, an intermediate transmission shaft 59 is disposed in an intermediate section between the output shaft 53a and the axle cases 52b and 52b, and left and right opposite end parts of the intermediate transmission shaft 59 are rotatably supported on the reduction case 52a. A large-diameter gear 60 meshing with the pinion gear 54 and a small-diameter gear 61 meshing with the final gear 58 are fixedly provided on the intermediate transmission shaft 59. The pinion gear 54, the large-diameter gear 60, the small-diameter gear 61, and the final gear 58 form a reduction gear 62 for transmitting rotation of the output shaft 53a of the electric motor 53 to the differential case 56 with a fixed reduction ratio.

Left and right rear axles 63 and 63 running through the left and right axle cases 52b and 52b are each relatively rotatably supported by the inner peripheral face of opposite end parts of the differential case 56, and side gears 64 and 64 are respectively spline-coupled to inner end parts, of the rear axles 63 and 63, projecting into the differential case 56. A pinion shaft 65, which is perpendicular to the axis of rotation of the differential case 56, is mounted thereon, and a pair of pinion gears 66 and 66, which mesh with the two side gears 64 and 64, are rotatably supported on the pinion shaft 65. The differential case 56, the pinion gears 66 and 66, and the side gears 64 and 64 form the differential 55 for distributing rotation of the final gear 58 between the left and right rear axles 63 and 63.

The left and right rear axles 63 and 63 are supported on outer end parts of the left and right axle cases 52b and 52b via ball bearings 67 and 67. The left and right rear wheels 2r and 2r are mounted integrally onto forward end parts of the left and right rear axles 63 and 63 projecting from the outer ends of the left and right axle cases 52b and 52b. The rear wheels 2r and 2r are therefore supported on the axle cases 52b and 52b via the rear axles 63 and 63.

The rear suspension system 51 is formed from a pair of left and right rear suspension arms 70 and 70 and a pair of left and right telescopic rear dampers 71 and 71. Each rear suspension arm 70 has a boss portion 70a at its front end supported via a front resilient bush 73 on a pivot shaft 72 that is secured to a bracket 69 in a rear end part of the frame intermediate portion 10b and extends laterally, so that the rear suspension arm 70 can swing vertically around the pivot shaft 72.

A pair of front and back support platforms 75 and 75 are fixed by welding to a rear end part of each rear suspension arm 70, and a pair of front and rear support arms 76 and 76' disposed above the support platforms 75 and 75 are projectingly provided integrally with front and rear opposite faces of the axle case 52b on the same side. Rear resilient bushes 77 and 77 having their axes directed vertically are provided on the support arms 76 and 76' as follows.

That is, an outer tube 78 and an inner tube 79, which are coaxial with each other, are fused to inner and outer peripheries of each rear resilient bush 77, and the outer tubes 78 and 78 of the front and back rear resilient bushes 77 and 77 are press-fitted into the support arms 76 and 76'. The inner tubes 79 and 79 of the front and back rear resilient bushes 77 and 77 are held and fixed between the support platforms 75 and 75 and a retaining plate 83 via bolts 80 and 80 running through the inner tubes 79 and 79.

In the arrangement above, each front resilient bush 73 is formed so that the modulus of elasticity in the vertical direction is smaller than the modulus of elasticity in the fore-and-aft direction. Each rear resilient bush 77 is formed so that the modulus of elasticity in the lateral direction is smaller than the modulus of elasticity in the fore-and-aft direction.

An upwardly rising bracket 81 is secured to each support arm 76 on the front side, and opposite end parts of the rear damper 71 are connected to the bracket 81 and an upper end part of the frame rear portion 10c.

When the rear wheels 2r and 2r are driven by output from the power unit 5, a reaction torque acting on the casing 52 is transmitted from the support arms 76 and 76' of the axle case 52b to the rear suspension arm 70 via the pair of front and back rear resilient bushes 77 and 77, the bolts 80 and 80, and the support platforms 75 and 75, and is received by the rear suspension arm 70. In this process, due to resilient deformation of the front and back rear resilient bushes 77 and 77, the impact of the reaction torque is appropriately alleviated; since the rear resilient bushes 77 and 77 are disposed in the fore-and-aft direction with the rear axle 63 interposed therebetween, a sufficient resistance force can be exhibited against the reaction torque, and by setting the modulus of elasticity in the fore-and-aft direction of these rear resilient bushes 77 at a relatively large value, the rigidity with which the power unit 5 is supported can be enhanced. It is therefore possible to suppress excessive swinging of the overall power unit 5 due to the reaction torque and to appropriately transmit power to the rear wheels 2r and 2r.

Furthermore, the pair of rear dampers 71 and 71 connected to the left and right support arms 76 and 76 on the front side of the axle cases 52b and 52b also function so as to oppose the reaction torque of the power unit 5, thus contributing to strengthening of the rigidity with which the power unit 5 is supported.

While the small-sized vehicle V is traveling, when different impacts are applied to the left and right rear wheels 2r and 2r from the road surface, due to resilient deformation of the front resilient bush 73 and the rear resilient bushes 77 and 77, the axle cases 52b and 52b are relatively easily tilted so that the side on which the impact from the road surface is higher is directed upward and, in response thereto, vertically swinging the left and right rear suspension arms 70 and 70 relative to each other enables the left and right rear wheels 2r and 2r to be individually raised up and down, thereby enhancing the road holding of each rear wheel 2r and contributing to an improvement in the ride comfort. In particular, setting the modulus of elasticity in the lateral direction of each rear resilient bush 77 so as to be relatively small is effective in promoting swinging of the left and right rear suspension arms 70 and 70 relative to each other and further improving the road holding of each rear wheel 2r.

Moreover, when cornering, if the rear wheels 2r and 2r receive a lateral load, a sufficient resistance force can be exhibited by cooperation between the front and back pairs of left and right rear resilient bushes 77 and 77: 77 and 77, and it is therefore possible to enhance the rigidity with which the rear wheels 2r and 2r are supported in the lateral direction and to stabilize the attitude of the rear wheels 2r and 2r.

Such a rear suspension system 51 has a simple structure and is easy to assemble, and it can be provided at low cost.

In FIG. 1 and FIG. 3 to FIG. 5, a pair of left and right fourth brackets 85 and 85 projecting obliquely downward are welded to an upper end part of the frame rear portion 10c, and opposite end parts of a U-shaped rear bumper 71 are secured to these fourth brackets 85 and 85 via bolts 87 so as to surround the electric motor 53 of the power unit 5. This rear bumper 71 exhibits a function of preventing the electric motor 53 from being damaged by a rear obstruction as well as a function of serving as a grip when the rear part of the small-sized vehicle V is lifted up and, moreover, when it is transported by a vehicle, it can be used as a latching part for a retaining tool for retaining the smali-sized vehicle V on a load-carrying tray.

Referring again to FIG. 1 to FIG. 3, detachably secured to the left and right support posts 17 and 17 via bolts (not illustrated) are the front side covers 90 and 90, which cover left and right opposite sides of these support posts, the front cover 91, which covers front faces of the support posts 17 and 17 and the steering column 28 and provides a connection between the two front side covers 90 and 90, and the leg shield 7, which covers rear faces of the support posts 17 and 17 and the steering column 28 and provides a connection between the two front side covers 90 and 90. In this way, the leg shield 7 is disposed so as to project laterally outward from the steering column 28 and cover from the front both legs of the driver D seated on the seat 6. The width of the leg shield 7 is set as for the floor panel 13 so that the width is less than the distance between inner edges of the left and right movable fenders 35 and 35 so as not to intimidate a pedestrian walking past on a sidewalk, an auxiliary cover 92 is provided integrally so as to be connected to the lower end of the leg shield 7, the auxiliary cover 92 having a broader width than that of the leg shield 7, covering rear parts of the left and right movable fenders 35 and 35 and a section therebetween, and being inclined downward to the rear, and the rear end of the auxiliary cover 92 is joined by bolting to the floor panel 13. Opposite end parts 92a and 92a of the auxiliary cover 92 covering the rear parts of the left and right movable fender 35 are formed in an arc shape that protrudes outward in the radial direction of the movable fender 35 and extends along the outer peripheral face of the movable fender 35. A floor mat 14 is laid down on a top face of the floor panel 13 so as to cover joins in the auxiliary cover 92. The floor panel 13 and the floor mat 14 form a footrest for the driver D, that is, a step floor 15.

Since the auxiliary cover 92 has a broader width than that of the leg shield 7 so as to cover the rear parts of the left and right movable fenders 35 and 35 and a section therebetween and extends between the leg shield 7 and the step floor 15, muddy water, etc. leaking past the movable fenders 35 and 35 and splashing rearward can be caught by the auxiliary cover 92.

Moreover, since the auxiliary cover 92 is provided so as to be connected to the lower part of the leg shield 7, even if the width thereof is broader than that of the leg shield 7, a pedestrian is not intimidated.

Furthermore, since the opposite end parts 92a and 92a of the auxiliary cover 92, which cover the rear part of the left and right movable fenders 35, are formed in an arc shape that protrudes outward in the radial direction of the movable fenders 35 and extends along the outer peripheral face of the movable fenders 35, it is possible to ensure that there is a sufficient gap between the movable fenders 35 and 35 and the auxiliary cover 92, thus avoiding interference between the movable fenders 35 and 35 and the auxiliary cover 92 when turning the front wheels 2f and 2f.

Moreover, since the auxiliary cover 92 is disposed between the leg shield 7 and the step floor 15, its width is broader than that of the leg shield 7, and it is inclined downward to the rear, this auxiliary cover 92 can also be used as an auxiliary step for the feet of the driver D to be put on in an extended state, thus contributing to an improvement in comfort.

A pair of left and right headlights 93 and 93 are mounted on a lower part of the front cover 91, and front direction indicators 94 and 94 are mounted on upper parts of the left and right front side covers 90 and 90. Furthermore, a rear cover 95 covering the power unit 5 and the left and right rear wheels 2r and 2r is secured to a rear part of the main frame 10, and tail lights 96 are mounted on a rear face of the rear cover 95.

The driver's seat 6 is formed from a seat cushion 6a supported on the seat rail 16 and a seat back 6b rising from a rear end part of the seat cushion 6a. The seat back 6b integrally includes support plates 97 and 97 on left and right opposite side faces, and a pair of left and right arm rests 98 and 98 are axially supported on the support plates 97 and 97 so that they can pivot between a horizontal working position and an upright retracted position. Rear direction indicators 95 and 95 are mounted on upper parts of the support plates 97 and 97 above these arm rests 98 and 98.

Furthermore, as clearly shown in FIG. 1, an L-shaped rear side cover 100 is mounted on the frame intermediate portion 10b and the frame rear portion 10c of the main frame 10 so as to cover them. The rear side cover 100, the front side cover 90, and the support plate 97 are representative of flat side faces of the vehicle body of the small-sized vehicle V, and a reflector 101 or a luminous body is attached over substantially the whole region of outer faces thereof. The reflector 101 suitably employs a metallic coating, a nearly neutral gray coating, a mirror, etc.; when a metallic coating, in particular a silver metallic coating, is employed, the reflector 101 can simply be formed by coating and, moreover, since the reflectance for illuminating light is relatively high, visibility is good.

Furthermore, the luminous body suitably employs a light-storing material or a fluorescent material, and when this is employed, since it actively emits light upon reception of illuminating light such as from the headlights of another vehicle, etc., the visibility is therefore high.

Moreover, a reflector 102 or a luminous body of the same type as above is attached to outside faces of the front wheels 2f and 2f and the rear wheels 2r and 2r.

While the small-sized vehicle V is crossing a roadway at night, when the side face of the vehicle body is illuminated by the headlights of another vehicle, due to light reflected from the reflectors 101 and 102 or light emitted by the luminous body, the rear side cover 100, the front side cover 90, the support plate 97, the front wheel 2f, and the rear wheel 2r stand out, thus making it easy for the driver of the other vehicle to recognize substantially the entire small-sized vehicle V and thereby enabling good side visibility of the small-sized vehicle V at night to be obtained.

The present invention is not limited to the embodiment above, and may be modified in a variety of ways as long as the modifications do not depart from the spirit and scope of the present invention. For example, the rear wheel 2r may be a single wheel, thus forming the small-sized vehicle V as a tricycle.

## Claims

1. A small-sized vehicle in which, in order to cover an upper part of a wheel (2f), a fender (35) is disposed along the outer peripheral face thereof,
wherein formed on the fender (35) is a first soil removing piece (44) projecting from the rear edge of the fender (35) so as to be inclined downwardly toward the outer peripheral face of the wheel (2f), so that when the wheel rotates forward, mud attached to the outer peripheral face thereof can be scraped off by the soil removing piece (44),
and wherein formed on the fender are a slit (46) positioned above the first soil removing piece (44) and extending in the width direction of the wheel (2f), and a second soil removing piece (45) projecting from the lower edge of the slit (46) toward the outer peripheral face of the wheel (2f),
**characterised in that** said second soil removing piece (45) projects from the lower edge of the slit (46) so as to be inclined upwardly toward the outer peripheral face of the wheel (2f), so that when the wheel rotates rearward mud attached to the outer peripheral face thereof can be guided to the slit while being scraped off and discharged outside the fender.

2. A small-sized vehicle according to Claim 1,
wherein a reinforcing wall (47) providing a connection between upper and lower edges of the slit (46) is formed on the fender (35) in a laterally intermediate section of the slit (46), and the reinforcing wall (47) is disposed closer to the outer peripheral face of the wheel (2f) than the first soil removing piece (44).

3. A small-sized vehicle according to Claim 1,
wherein a third soil removing piece (48) is formed on an outside wall portion (35c) of the fender (35) covering the outside face of the wheel (2f), the third soil removing piece (48) being connected to the first soil removing piece (44) and projecting toward the outside face of the wheel (2f).

4. A small-sized vehicle according to Claim 1,
wherein a soil removing piece (49) is formed on an inside wall portion (35b) of the fender (35) covering the inside face of the wheel (2f), the soil removing piece (49) being inclined relative to the radius of the wheel (2f) and projecting toward the inside face of the wheel (2f).

5. A small-sized vehicle according to Claim 1,
wherein the fender (35) is secured to a wheel support member (26) axially supporting the wheel (2f) via at least three positions, that is, two positions (36a, 36a) sandwiching a vertical plane (P) containing the axis of rotation of the wheel (2f) and one position (37a) in the proximity of the first soil removing piece (44).

6. A small-sized vehicle according to Claim 1,
wherein it comprises a pair of left and right turnable front wheels (2f, 2f), a steering column (28) disposed between the two front wheels (2f, 2f) in an upright state and supporting handlebars (3), a steering mechanism (4) disposed across the two front wheels (2f, 2f) so as to couple the handlebars (3) to the two front wheels (2f, 2f), a driver's footrest part (15) disposed to the rear of the steering column (28), and a driver's seat (6) disposed to the rear of the footrest part (15), the fender being disposed so as to cover an upper part of each front wheel and turning integrally with the front wheel, and this fender (35) being provided with the slit (46) and the soil removing pieces (44, 45).

## Patentansprüche

1. Kleinfahrzeug, bei welchem, um einen oberen Teil eines Rades (2f) zu bedecken, ein Kotflügel (35) entlang der äußeren Umfangsfläche davon angeordnet ist,
wobei an dem Kotflügel (35) ein erstes Schmutz-entfernendes Stück (44) gebildet ist, das von der Hinterkante des Kotflügels (35) vorsteht, um nach unten zu der äußeren Umfangsfläche des Rades (2f) geneigt zu sein, so dass, wenn das Rad nach vorne dreht, Dreck, welcher an der äußeren Umfangsfläche davon angebracht ist, durch das Schmutz-entfernende Stück (44) abgekratzt werden kann,
und wobei an dem Kotflügel ein Schlitz (46), der über dem ersten Schmutzentfernenden Stück (44) positioniert ist und sich in die Breitenrichtung des Rades (2f) erstreckt, und ein zweites Schmutz-entfernendes Stück (45), welches von dem unteren Rand des Schlitzes (46) zu der äußeren Umfangsfläche des Rades (2f) vorsteht, gebildet sind,
**dadurch gekennzeichnet, dass** das zweite Schmutz-entfernende Stück (45) von dem unteren Rand des Schlitzes (46) vorsteht, um nach oben zu der äußeren Umfangsfläche des Rades (2f) geneigt zu sein, so dass, wenn das Rad nach hinten dreht, Dreck, welcher an der äußeren Umfangsfläche davon angebracht ist, zu dem Schlitz geführt werden kann, während er abgekratzt und außerhalb des Kotflügels ausgeworfen wird.

2. Kleinfahrzeug nach Anspruch 1,
wobei eine Verstärkungswand (47), die eine Verbindung zwischen dem oberen und dem unteren Rand des Schlitzes (46) bereitstellt, an dem Kotflügel (35) in einem Längszwischenabschnitt des Schlitzes (46) gebildet ist, und wobei die Verstärkungswand (47) näher an der äußeren Umfangsfläche des Rades (2f) als das erste Schmutz-entfernende Stück (44) angeordnet ist.

3. Kleinfahrzeug nach Anspruch 1,
wobei ein drittes Schmutz-entfernendes Stück (48) an einem Außenwandabschnitt (35c) des Kotflügels (35), der die Außenfläche des Rades (2f) bedeckt, gebildet ist, wobei das dritte Schmutz-entfernende Stück (48) mit dem ersten Schmutz-entfemenden Stück (44) verbunden ist und zu der Außenfläche des Rades (2f) vorsteht.

4. Kleinfahrzeug nach Anspruch 1,
wobei ein Schmutz-entfernendes Stück (49) an einem Innenwandabschnitt (35b) des Kotflügels (35), der die Außenfläche des Rades (2f) bedeckt, gebildet ist, wobei das Schmutz-entfernende Stück (49) relativ zu dem Radius des Rades (2f) geneigt ist und zu der Innenfläche des Rades (2f) vorsteht.

5. Kleinfahrzeug nach Anspruch 1,
wobei der Kotflügel (35) an einem Radhalteelement (26) gesichert ist, welches das Rad (2f) mittels wenigstens dreier Positionen axial hält, d.h. zwei Positionen (36a, 36a), die eine vertikale Ebene (P) zwischen sich aufnehmen, welche die Drehachse des Rades (2f) umfasst, und eine Position (37a) in der Nähe des ersten Schmutz-entfemenden Stücks (44).

6. Kleinfahrzeug nach Anspruch 1,
wobei es umfasst:
- ein Paar von linken und rechten schwenkbaren Vorderrädern (2f, 2f),
- eine Lenksäule (28), die zwischen den zwei Vorderrädern (2f, 2f) in einem aufrechten Zustand angeordnet ist und eine Lenkstange (3) hält,
- einen Lenkmechanismus (4), der über den zwei Vorderrädern (2f, 2f) angeordnet ist, um die Lenkstange (3) an die zwei Vorderräder (2f, 2f) zu koppeln,
- ein Fahrerfußstützenteil (15), das hinter der Lenksäule (28) angeordnet ist, und
- einen Fahrersitz (6), der hinter dem Fußstützenteil (15) angeordnet ist,
wobei der Kotflügel angeordnet ist, um einen oberen Teil von jedem Vorderrad zu bedecken und zusammen mit dem Vorderrad zu schwenken, und wobei dieser Kotflügel (35) mit dem Schlitz (46) und den Schmutzentfernenden Stücken (44, 45) vorgesehen ist.

## Revendications

1. Véhicule de petite taille dans lequel, afin de recouvrir une partie supérieure d'une roue (2f), un garde-boue (35) est disposé le long de sa face périphérique externe,
dans lequel, formée sur le garde-boue (35), on trouve une première pièce de retrait de saleté (44) faisant saillie du bord arrière du garde-boue (35) afin d'être inclinée vers le bas vers la face périphérique externe de la roue (2f), de sorte que lorsque la roue tourne en marche avant, la boue fixée sur sa face périphérique externe peut être raclée par la pièce de retrait de saleté (44),
et dans lequel formée sur le garde-boue, on trouve une fente (46) positionnée au-dessus de la première pièce de retrait de saleté (44) et s'étendant dans le sens de la largeur de la roue (2f), et une seconde pièce de retrait de saleté (45) faisant saillie du bord inférieur de la fente (46) vers la face périphérique externe de la roue (2f),
**caractérisé en ce que** ladite seconde pièce de retrait de saleté (45) fait saillie du bord inférieur de la fente (46) afin d'être inclinée vers le haut en direction de la face périphérique externe de la roue (2f), de sorte que lorsque la roue tourne vers l'arrière, la boue fixée sur sa face périphérique externe peut être guidée vers la fente tout en étant raclée et déchargée à l'extérieur du garde-boue.

2. Véhicule de petite taille selon la revendication 1, dans lequel une paroi de renforcement (47) fournissant un raccordement entre les bords supérieur et inférieur de la fente (46), est formée sur le garde-boue (35) dans une section latéralement intermédiaire de la fente (46), et la paroi de renforcement (47) est disposée plus à proximité de la face périphérique externe de la roue (2f) que la première pièce de retrait de saleté (44).

3. Véhicule de petite taille selon la revendication 1, dans lequel une troisième pièce de retrait de saleté (48) est formée sur une partie de paroi externe (35c) du garde-boue (35) recouvrant la face externe de la roue (2f), la troisième pièce de retrait de saleté (48) étant raccordée à la première pièce de retrait de saleté (44) et faisant saillie vers la face externe de la roue (2f).

4. Véhicule de petite taille selon la revendication 1,
dans lequel une pièce de retrait de saleté (49) est formée sur une partie de paroi interne (35b) du garde-boue (35) recouvrant la face interne de la roue (2f), la pièce de retrait de saleté (49) étant inclinée par rapport au rayon de la roue (2f), et faisant saillie vers la face interne de la roue (2f).

5. Véhicule de petite taille selon la revendication 1, dans lequel le garde-boue (35) est fixé sur un élément de support de roue (26) supportant de manière axiale la roue (2f) via au moins trois positions, c'est-à-dire deux positions (36a, 36a) prenant en sandwich un plan vertical (P) contenant l'axe de rotation de la roue (2f) et une position (37a) à proximité de la première pièce de retrait de saleté (44).

6. Véhicule de petite taille selon la revendication 1, comprenant une paire de roues avant rotatives gauche et droite (2f, 2f), une colonne de direction (28) disposée entre les deux roues avant (2f, 2f) dans un état droit et supportant des guidons (3), un mécanisme de direction (4) disposé sur les deux roues avant (2f, 2f) afin de coupler les guidons (3) aux deux roues avant (2f, 2f), une partie de repose-pied (15) de conducteur disposée sur l'arrière de la colonne de direction (28) et un siège (6) dé conducteur disposé sur l'arrière de la partie de repose-pied (15), le garde-boue étant disposé afin de recouvrir une partie supérieure de chaque roue avant et tournant de manière solidaire avec la roue avant, et ce garde-boue (35) étant prévu avec une fente (46) et les pièces de retrait de saleté (44, 45).
